# EUROPEAN PATENT SPECIFICATION

(11) **EP 3 319 275 B1**
(45) Date of publication and mention of the grant of the patent: **26.06.2019**
(21) Application number: 17199853.7
(22) Date of filing: 03.11.2017
(51) Int. Cl.: H04L 12/40, H04L 29/06

(54) **METHOD FOR MONITORING DATA TRAFFIC IN A MOTOR-VEHICLE NETWORK**
VERFAHREN ZUR ÜBERWACHUNG EINES DATENVERKEHRS IN EINEM KRAFTFAHRZEUGNETZWERK
PROCÉDÉ PERMETTANT DE SURVEILLER LE TRAFIC DE DONNÉES DANS UN RÉSEAU DE VÉHICULES À MOTEUR

(30) Priority: 07.11.2016 IT 201600111869
(43) Date of publication of application: 09.05.2018
(73) Proprietor: Magneti Marelli S.p.A., 20011 Corbetta (MI) (IT)
(72) Inventor: CORNELIO, Anastasia, I-20011 Corbetta (Milano) (IT); BRAGAGLIA, Elisa, I-20011 Corbetta (Milano) (IT); SENNI GUIDOTTI MAGNANI, Cosimo, I-20011 Corbetta (Milano) (IT); NESCI, Walter, I-20011 Corbetta (Milano) (IT)
(74) Representative: Crovini, Giorgio

(56) References cited:
- US-A1- 2014 250 528
- US-A1- 2015 089 236
- US-A1- 2016 308 891

## Description

The present invention relates to techniques for monitoring the data traffic over a CAN bus of a CAN-type communication network of a motor vehicle, the communication network comprising a plurality of nodes associated to said CAN bus in a signal-exchange relationship in order to detect data traffic with anomalies and generate an alert.

The Controller Area Network (CAN) has asserted itself as the principal communication channel within motor vehicles. The CAN is based upon the broadcast of frames, or messages, in order to share data between different microcontrollers, managing critical or accessory functions, such as cruise control or air-conditioning. The CAN, and the corresponding bus, are distinguished by their simplicity, compatibility with real-time application, and low installation cost.

However, the major disadvantage of the CAN lies in the lack of support to security. In other words, the CAN does not provide a protection against attacks, such as intrusion, denial of service, or impersonation.

The object of the present invention is to provide a monitoring method that will enable detection of suspect behaviours in the traffic that travels on the CAN bus and possibly generates corresponding alerts.

Document US2016/308891 discloses a method for monitoring the data traffic over a CAN bus of a CAN-type communication network of a motor vehicle comprising a plurality of nodes associated to said CAN bus in a signal-exchange relationship in order to detect data traffic with anomalies and generate an alert according to the preamble of claim 1.

According to the present invention, the above object is achieved thanks to a monitoring method, as well as to a corresponding communication network and node of the communication network, that present the characteristics recalled specifically in the ensuing claims.

The invention will be described with reference to the annexed drawings, which are provided purely by way of non-limiting example and in which:
- Figure 1 is a schematic representation of a data-communication network operating according to the method described herein;
- Figure 2 is a detailed view of a node of the above data-communication network;
- Figure 3 is a schematic representation of a diagram of operations carried out off-line for configuring a module of the aforesaid node;
- Figure 4 is a schematic representation of a diagram of operations carried out on-line by the above module of the aforesaid node;
- Figure 5 is a schematic representation of a detection procedure carried out by a further module of the aforesaid node; and
- Figure 6 is a schematic representation of a detection procedure carried out by a further module of the aforesaid node.

In brief, the method described herein for monitoring the data traffic over a CAN bus of a CAN-type communication network of a motor vehicle, i.e. a four wheeled or two wheeled vehicle, comprising a plurality of nodes associated to said CAN bus in a signal-exchange relationship, in order to detect data traffic with anomalies and generate an alert, envisages execution, on each node, of an intrusion-detection operation on messages received at said node and a corresponding vehicle-recovery operation, the intrusion-detection operation comprising receiving CAN messages or groups of CAN messages transmitted to the node on the CAN bus, analysing said CAN messages or groups of CAN messages, and issuing an alert comprising a type of anomaly that has caused the alert, the vehicle-recovery operation comprising implementing, on the basis of said type of anomaly, a corresponding intrusion-recovery action.

Likewise, described herein is a vehicle CAN-type communication network, comprising a CAN bus and a plurality of nodes, which are associated to the CAN bus in signal exchange and comprise control units for controlling functions of the vehicle, these nodes being configured for detecting data traffic with anomalies and generating an alert, where each node comprises a module, for example implemented via software in a processor of the node, which is configured for executing the intrusion-detection operation, and a module, once again for example implemented via software in a processor of the node, which is configured for executing the vehicle-recovery operation according to the monitoring method indicated in the previous paragraph.

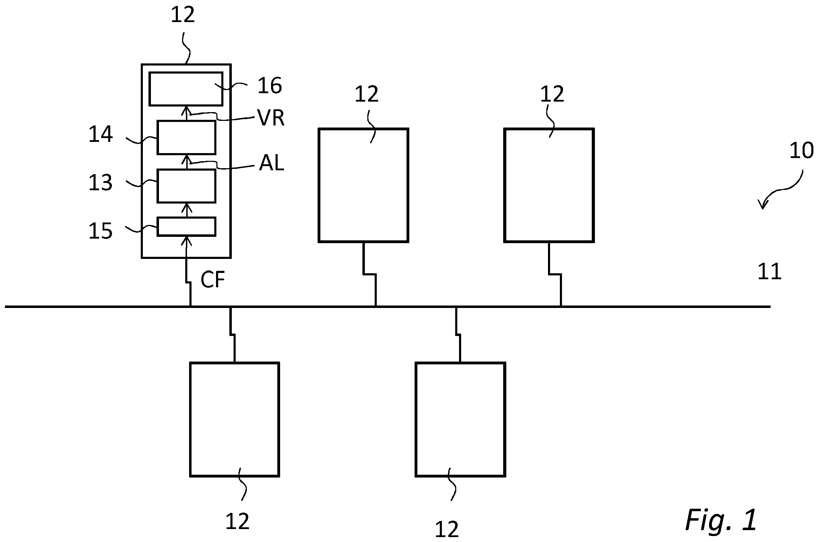

In this regard, illustrated in Figure 1 is a CAN-type communication network of a motor vehicle, which is designated as a whole by the reference number 10. The communication network 10 comprises a CAN bus 11 to which a plurality of CAN nodes 12 are connected. The operating modalities of CANs and CAN buses are in themselves known to the person skilled in the sector - as appears, for example, from the standard ISO 11898-1 - and will hence not be illustrated herein.

The nodes 12 are provided with a CAN interface 15 for data exchange on the CAN bus 11 and comprise, as illustrated in detail for just one of the aforesaid nodes (Figure 1), electronic control units (ECUs) 16, which correspond, among other things, to various types of electronic control units with microprocessor for controlling different vehicle systems, for example, the engine, brakes, suspension, transmission, lights, air-conditioning, power windows, door-locking, airbags. The nodes 12 may of course comprise other electronic modules, for example gateway modules.

As illustrated in Figure 1, according to a main aspect of the solution described herein, each node 12 associated to the CAN bus 11 comprises a first monitoring module, which is a module 13 for detecting intrusions, and a second monitoring module, which is a module 14 for recovery from intrusion. The intrusion-detection module 13 receives CAN frames CF through the CAN interface 15, analyses them and transmits, upon detection of an anomaly in a single frame CF or in a group G of frames CG, an intrusion alert AL to the intrusion-recovery module 14, which, on the basis of the intrusion alert AL, implements an intrusion-recovery action VR. In general, in addition to the intrusion alert AL, also a status, of start or end, of the intrusion alert AL is transmitted.

The CAN frames CF, in a way in itself known, comprise, for example, the following segments:
Start-Of-Frame (SOF) (1 bit): this indicates the start of the transmission sequence;
Identifier (11 bits, or 29 bits in the case of extended identifier): (sole) identifier of the data, hereinafter denoted by CAN_ID;
Remote Transmission Request (RTR) (1 bit): this must be a dominant bit;
additional identifier bit (IDE) (1 bit): this must be a dominant bit;
reserved bit (r0) (1 bit): reserved;
Data-Length Code (DLC) (4 bits): this indicates the number of bytes for encoding each datum (0-8 bytes);
Data field (0-8 bytes): this indicates the data to be transmitted (the length is specified by the DLC field); in what follows, referred to as payload PL;
CRC (15 bits): redundancy parity control;
CRC delimiter (1 bit): this must be a recessive bit;
ACK slot (1 bit): the transmitter sends a recessive bit, and each receiver can confirm receipt with a dominant bit;
ACK delimiter (1 bit): this must be a recessive bit;
End-Of-Frame (EOF) (7 bits): these must be recessive bits.

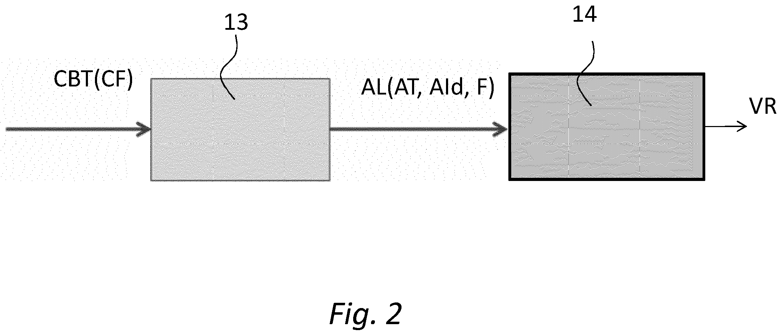

Illustrated in Figure 2 is the intrusion-detection module 13 for on-line monitoring of a data traffic CBT over a CAN bus 11 in order to detect any suspect behaviour. The first intrusion-detection module 13 receives as input the CAN frames CF of a data traffic CBT transmitted on the bus 11 and supplies at output an intrusion alert AL, which comprises at least the following information on the anomaly detected that has generated the intrusion alert AL: a type of anomaly AT and an anomaly identifier AId, and an anomaly-alert status flag F, i.e., an anomaly-alert status signal F, preferably of a flag, i.e., two-valued, type, which signals start or end of the anomaly detected. The intrusion alert AL is sent at two instants: at the instant corresponding to identification of the anomaly and at the instant in which detection of the anomaly ceases or it is evaluated that the anomaly is no longer in progress. At these two instants, the anomaly type AT and the anomaly identifier AId maintain the same value, whereas the flag F is sent with value 1 at the instant corresponding to identification of the anomaly to indicate that the anomaly is in progress, and then with value 0, at the instant when the anomaly ceases to be detected, to indicate that the anomaly is no longer present. For instance, if the first intrusion-detection module 13 detects that a certain identifier CAN_ID is transmitted at a frequency higher than the expected one, sends an alert AL with values AT=AT1, AId=CAN_ID, and F=1. As soon as the frequency of transmission of that particular identifier CAN_ID returns to being the expected one according to the evaluation made by the first intrusion-detection module 13, the first intrusion-detection module 13 sends an alert AL with values AT=AT1, AId=CAN_ID, and F=0.

The first intrusion-detection module 13 is configured for detecting one or more of the following anomalies, i.e., anomaly types AT, in the CAN frames CF received in the data traffic CBT:
- Cyclic Message Rate, AT1: reception of a CAN frame CF with a specific CAN identifier, or CAN_ID, that has a period shorter or longer than an expected period;
- Aperiodic Message Rate, AT2: reception of too many aperiodic CAN frames CF within a given measured period of time;
- Incorrect or Unknown Message, AT3: reception of a CAN frame CF the CAN identifier CAN_ID of which is not contained in a database of the CAN frames published or contains an incorrect CAN message, which corresponds to a message that contains a valid CAN identifier CAN_ID, but with a data length not envisaged or expected;

- Denial of Service, AT4: reception of an excessive number of CAN frames CF in a given period of time;
- Out of Range, AT5: reception of valid CAN frames CF with values out of the range defined in the database of the CAN frames;
- Average Level, AT6: reception of selected signals the value of which presents deviations greater than pre-set thresholds from the mean value of the last signals gathered;
- Message Counter, AT7: reception of an unexpected message-counter value; some CAN frames contain a counter, the value of which starts from 0 and is increased by a value established at each transmission of a frame CF; once the maximum value is reached, the counter is reset; in particular, the maximum value depends upon the length of the signal containing the counter; i.e., a length of 4 bits means that the values of the counter lie in the range [0, 15];
- Invalid Diagnostic Session, AT8: reception of diagnostic CAN frames CF during occurrence of specific vehicle conditions;
- Implausible Vehicle State, AT9: reception of one or more signals, within a given group of signals, the values of which describe an unlikely state of the vehicle;
- Special Patterns, AT10: reception of a given group of CAN frames CF with an unexpected sequence.

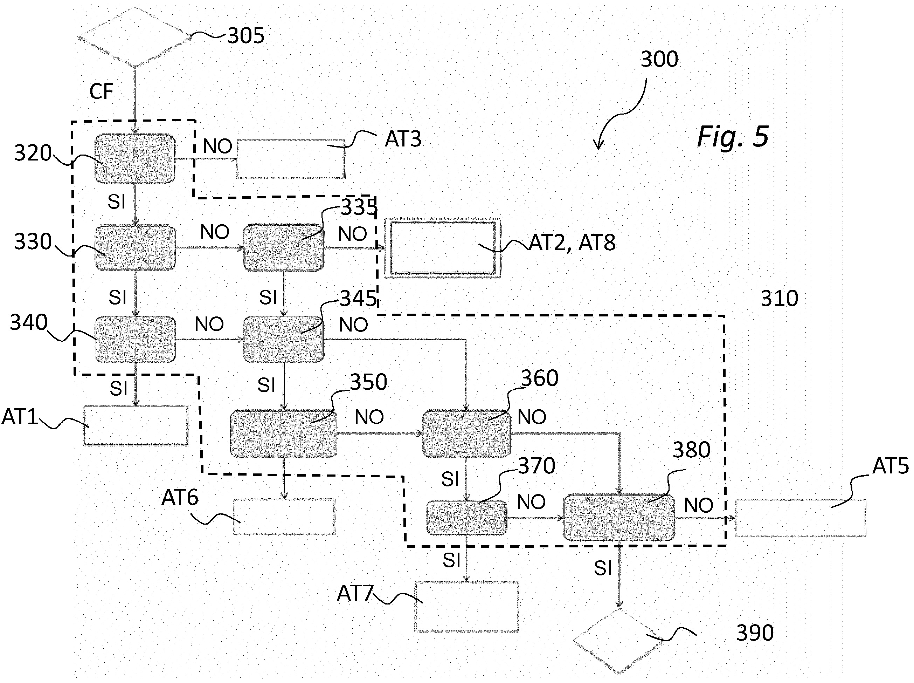

The anomaly types AT in the list appearing above may involve either a single CAN frame CF (Cyclic Message Rate, Aperiodic Message Rate, Out of Range, Incorrect or Unknown Message, Average Level, Message Counter, Invalid Diagnostic Session) or a group G of frames CF (Denial of Service, Implausible Vehicle State, Special Patterns). On the basis of the above division into single frames or groups G of frames, detection of the anomalies, i.e., of an intrusion, indicated through the respective anomaly type AT, is implemented through two sequential anomaly-detection procedures. The first, designated by 300 in Figure 5, is executed for each new frame CF received at the node 12, and the second is executed on the new groups G of frames CF received. This operation of anomaly detection 300, 400 takes place in the first module, i.e., the intrusion-detection module 13, which generates at output an alert AL that includes the type of anomaly AT that it has detected and an identifier AId of the anomaly that it has detected. For the anomalies that involve just one frame, the anomaly identifier AId is the frame identifier CAN_ID that has been identified as anomalous. As regards the anomalies that, instead, involve groups G of frames, there does not exist just one identifier CAN_ID, because it is a group of frames that has triggered the anomaly. In this case, for anomalies such as Denial of Service and Implausible Vehicle State, the anomaly identifier AId is not defined in the alert AL, whereas for the anomaly of the group Special Patterns, the anomaly identifier AId identifies the sequence that has proven anomalous.

This may be noted from the tables provided below, which indicate the recovery actions and exit conditions, where Table 2 contains only anomalies regarding individual frames, and Table 3 regards the group anomalies.

It should be noted that a further categorization of the anomalies can be carried out on the basis of the characteristics that are involved in monitoring. In particular, some irregularities, and hence some anomaly types AT, are linked to:
- characteristics of transmission (Cyclic Message Rate, Aperiodic Message Rate, Incorrect or Unknown Message, Denial of Service);
- characteristics of the contents of the payload PL of the frames CF (Out of Range, Average Level, Message Counter, Implausible Vehicle State); or
- both of the above characteristics (Invalid Diagnostic Session, Special Patterns).

As illustrated in Figure 2, the anomaly type AT and the anomaly identifier AId are the input of the intrusion-recovery module 14, which, on the basis of the alert AL, defined via anomaly type AT and the anomaly identifier AId, generates a vehicle-recovery action VR.

The intrusion-recovery module 14 carries out the aforesaid generation of an vehicle-recovery action VR, on the basis of a recovery-action data structure, appearing in Figure 5 as database REC, which at each anomaly type AT associates the recovery action VR to be performed, as well as a condition of exit CE from the alert AL.

The above recovery-action database REC is built via a procedure of definition of recovery actions 100, which defines the recovery actions VR for each type of anomaly AT that can be detected in the frames CF.

For this purpose, it is envisaged, according to the method described herein, to define a division into categories of functions FC of the vehicle. The procedure of definition of recovery actions 100 makes use of this division in the definition of Table 1 described below. In particular, four categories of functions FC are defined:
- engine/steering/brake category, FC1: this category comprises checks on critical resources, executed through control units 16, such as the engine, management of brakes, control of transmission, and systems that provide assistance to driver safety, such as ABS, tyre-pressure monitoring, adaptive cruise control, and anti-collision systems;
- vehicle-frame category, FC2: this category comprises control units 16 that provide functions of comfort such as driver assistance, heat-conditioning management, parking assistance, vehicle performance, such as vehicle suspensions, control of shock absorbers, and integration between systems, such as Body Control Module (BCM) and the gateway for access to the network;
- infotainment category, FC3: this category comprises systems for audio support in the vehicle, such as audio streaming and digital-TV broadcasting, and systems that receive data from external sources, such as traffic and weather information systems;
- navigation/telematic category, FC4: the telematic category regards systems that integrate telecommunications and computer-science technology, used for providing networked applications, such as web applications, and mobile communications, for example GPRS.

There now follows a description of the recovery actions proposed:
- Recovery1 for reaching the state that is such as to guarantee safety of the driver, of the vehicle occupants, and of other road users;
- Recovery2, for disabling the compromised function;
- Recovery3, for ignoring the contents of threatening identifiers CAN_ID, while seeking to maintain the rest of the functions implemented; and
- Recovery4, for inhibiting the Diagnostic Service.

The recovery strategies are executed when the intrusion-detection module 13 issues an alert AL that warns about the anomalous behaviour of a specific identifier CAN_ID. The state of alert AL, reached when the recovery is executed, persists until an exit condition CE arises.

The exit conditions CE described herein are the following:
- Condition1, CE1: this condition occurs when the vehicle key is turned into an off position; and
- Condition2, CE2: this condition occurs when the state of detected anomaly has ceased; this information is received by the intrusion-detection module 13, which transmits an alert AL with flag F equal to zero.

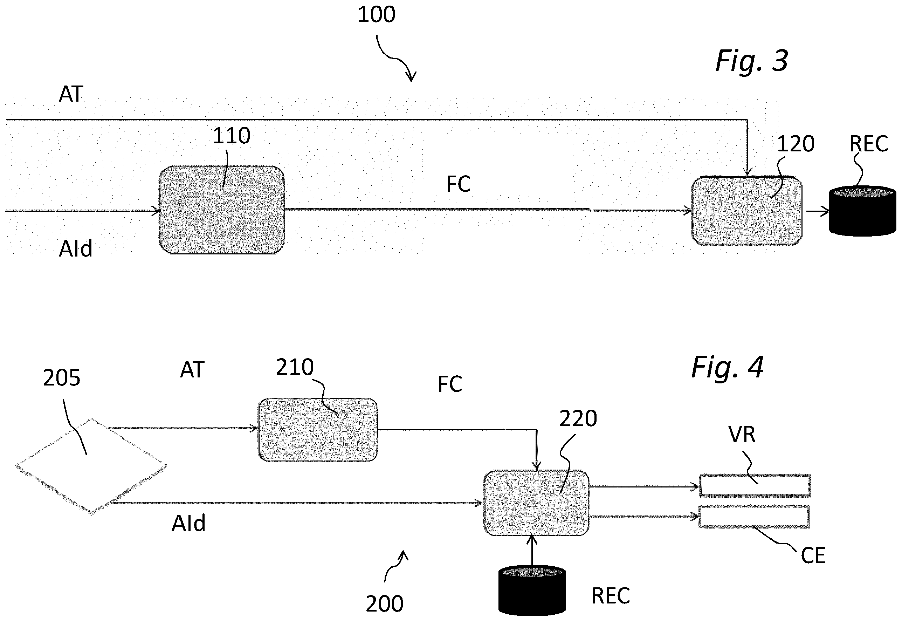

Described in what follows, is a vehicle-recovery procedure carried out off-line, i.e., for example, in the factory, which assigns a recovery action and an exit condition to each anomaly, with reference to Figure 3, which illustrates a principle flowchart of the procedure of definition of recovery actions, designated as a whole by the reference 100.

On the basis of the identifier CAN_ID of the suspect frame CF, each anomaly type AT may involve different functions FC.

For this reason, the procedure of off-line definition of recovery actions 100 comprises an operation 110 of mapping of the identifiers CAN_ID of the frames CF with respect to the categories of functions FC, which is used for associating the anomaly identified, and defined through the anomaly type AT and the anomaly identifier AId, to the corresponding category of functions FC. This operation 110 of mapping of the functions depends upon the network of the vehicle and upon the implementation of functions that must be carried out for each vehicle. This mapping operation 110 comprises assigning each identifier CAN_ID of frames CF that belongs to the database of CAN messages of a specific vehicle to the function FC on which it has an effect. For instance, the identifier CAN_ID that denotes a frame that contains signals regarding the engine is mapped in the engine/steering/brake functional category FC1.

Once the category of functions FC has been defined, in a step 120 a data structure of the recovery operations is built, in particular a database REC that comprises a table, for example a look-up table, which assigns to the recovery operations a given recovery solution that may be able to recover the system, hence associating to each anomaly type AT and functional category FC a recovery action VR and an exit condition CE.

Illustrated hereinafter is a Table 2 that corresponds to an example of contents of the look-up table in the operation-recovery database REC, which is determined by the procedure of off-line definition of recovery actions 100.

It should be noted that in Table 2 the anomaly type AT Incorrect or Unknown Message has been divided into two cases, namely, Incorrect and Unknown. Moreover, the anomaly type AT Special Patterns is not indicated in Table 2 in so far as it markedly depends upon the vehicle network and upon the implementation of the function.

**Table 2 - Recovery action VR and exit condition CE for each anomaly type AT detected for individual anomalies**

| **Anomaly type AT** | **Category of functions FC involved** | **Recovery action VR** | **Exit condition CE** |
|---|---|---|---|
| Cyclic | Engine/Steering/Brakes | Recovery1 | Condition1 |
| Message Rate AT1 | Vehicle frame | Recovery2 | Condition2 |
| | Infotainment | Recovery3 | Condition2 |
| | Telematics and Navigation | Recovery2 | Condition1 |
| Aperiodic Message Rate AT2 | Engine/Steering/Brakes | Recovery1 | Condition1 |
| | Vehicle frame | Recovery2 | Condition2 |
| | Infotainment | Recovery3 | Condition2 |
| | Telematics and Navigation | Recovery2 | Condition1 |
| Incorrect Message AT3 | Engine/Steering/Brakes | Recovery3 | Condition1 |
| | Vehicle frame | Recovery3 | Condition2 |
| | Infotainment | Recovery3 | Condition2 |
| | Telematics and Navigation | Recovery3 | Condition2 |
| Unknown Message AT3 | | Recovery3 | Condition2 |
| Out of Range AT5 | Engine/Steering/Brakes | Recovery3 | Condition2 |
| | Vehicle frame | Recovery3 | Condition2 |
| | Infotainment | Recovery3 | Condition2 |
| | Telematics and Navigation | Recovery3 | Condition2 |
| Average Level AT6 | Engine/Steering/Brakes | Recovery3 | Condition2 |
| | Vehicle frame | Recovery3 | Condition2 |
| | Infotainment | Recovery3 | Condition2 |
| | Telematics and Navigation | Recovery3 | Condition2 |
| Message Counter AT7 | Engine/Steering/Brakes | Recovery3 | Condition2 |
| | Vehicle frame | Recovery3 | Condition2 |
| | Infotainment | Recovery3 | Condition2 |
| | Telematics and Navigation | Recovery3 | Condition2 |
| Invalid Diagnostic Session AT8 | Engine/Steering/Brakes | Recovery4 | Condition1 |
| | Vehicle frame | Recovery4 | Condition1 |
| | Infotainment | Recovery4 | Condition1 |
| | Telematics and Navigation | Recovery4 | Condition1 |

**Table 3 - Recovery action VR and exit condition CE for each anomaly type AT detected for groups of anomalies**

| **Anomaly type AT** | **Recovery action VR** | **Exit condition CE** |
|---|---|---|
| Denial of Service AT4 | Recovery4 | Condition1 |
| Implausible Vehicle State AT9 | Recovery1 | Condition2 |

The database REC hence preferably comprises two separate tables, Table 2 for the individual CAN messages CF and Table 3 for the groups G.

Once the procedure of off-line definition of recovery actions 100, which defines the database REC, has been executed, it can be used by the vehicle in conditions of operation, or in any case when the communication network 10 of the vehicle is operating. In this connection, Figure 4 shows a procedure of selection of recovery actions 200, executed by the vehicle-recovery module 14, on-line, i.e., during operation of the vehicle and of the corresponding CAN, which enables determination and execution of the recovery action VR by the vehicle-recovery module 14 on the basis of a detection of intrusion and a consequent intrusion alert AL issued by the intrusion-detection module 13.

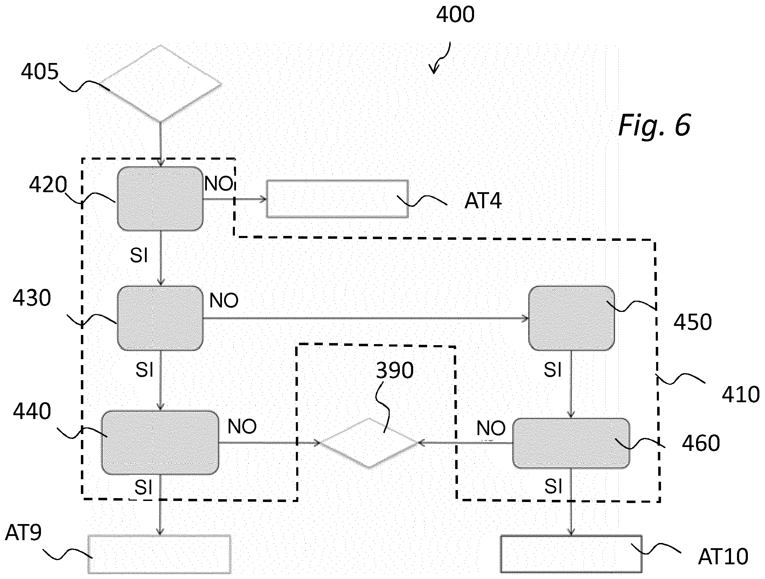

In a step 205, in the intrusion-detection module 13, an anomaly-detection operation is carried out, which supplies the anomaly type AT, the anomaly identifier AId, and the flag F. This operation corresponds to the procedures 300 and 400 described in what follows with reference to Figures 5 and 6.

In a step 210, the mapping of functions obtained in the off-line mapping step 110 is used. On the basis of the anomaly identifier AId, the functional category FC involved is extracted. When a single anomaly is signalled, the vehicle-recovery module 14 has available the values of an anomaly type AT and an anomaly identifier AId contained in the alert AL. To identify the recovery action VR and the exit condition CE, it needs the information on the functional category FC, which is obtained by exploiting the mapping carried out in step 110, which assigns to each frame identifier CAN_ID or anomaly identifier AId the corresponding functional category FC.

In a step 220, on the basis of the function FC involved provided by step 210 and of the anomaly type AT received in step 205, a vehicle-recovery action VR is generated, as well as the corresponding exit condition CE, using the recovery-action database REC, which comprises a look-up table similar to Table 2, which, according to the anomaly type AT, returns the recovery action VR and the corresponding exit condition CE.

Illustrated in Figure 5 is a flowchart of the procedure 300 of detection of an anomaly in a new frame CF.

In a step 305, a new frame CF is received at the node 12.

This new frame CF is sent to an analysis block 310, which comprises a sequence of steps 320-380 of verification of characteristics of the frames CF received at the node 12, this sequence of verification steps being executed by supplying at output, as a function of the characteristics of the frames CF received, an indication of the anomaly type AT detected or an indication of valid message, which is designated hereinafter by 390.

In particular, in a step 320 it is verified whether the identifier CAN_ID of the frame CF and/or the data-length code DLC are valid. If not, an alert AL is issued indicating a anomaly with anomaly type AT Incorrect or Unknown Message AT3. Otherwise, control passes to a step 330 in which it is verified whether the frame CF is cyclic. If it is cyclic, a step 340 is carried out to check whether the period of transmission of the frame CF is the expected one. If it is not the expected one, an alert AL is issued indicating an anomaly with anomaly type AT1 Cyclic Message Rate.

In the case of negative outcome from step 330, a step 335 is carried out in which it is verified whether the presence of a non-cyclic frame CF is acceptable. If it is not acceptable, an alert AL is issued indicating an anomaly with anomaly type AT2 Aperiodic Message Rate or Invalid Diagnostic Session AT8. In the case of positive outcome of the verification step 345, a step is carried out to verify whether the average level is to be verified. Step 345 is reached also in the case of negative outcome from the step 340 of verification of whether the frame CF has a valid period.

In the case of positive outcome of the step 335 of verification as to whether the average level is to be verified, in a step 350 it is verified whether the frame CF has contents outside of the average-level range. If it has, an alert AL is issued indicating an anomaly with anomaly type Average Level AT6.

In the case of negative outcome from step 350, a step 360 is carried out to verify whether the frame CF includes a message counter. This step 360 is also reached in the case of negative outcome from the step 345 of verification as to whether the average level is to be verified.

In the case of positive outcome from the verification step 360, in a step 370 it is verified whether the value in the message counter is wrong. In the case of positive outcome from step 370, an alert AL is issued indicating an anomaly with anomaly type Message Counter AT7.

In the case of negative outcome from step 370, in a step 380 it is verified whether the contents of the frame CF fall within an admissible range. If they do, the frame CF is indicated as being valid. Hence, the valid frame CF is not passed to the second module for execution of the procedure 300. In the case of negative outcome from step 380, an alert AL is issued indicating an anomaly AT with anomaly type AT5 Out of Range. Step 380 is reached also if, in step 370, it is verified that the value in the message counter is wrong (negative outcome).

Hence, the procedure 300 provides, on the basis of the new frame CF received in step 305, either generation of alerts AL with different types of message that are supplied to the procedure 200 together with the identifier CAN_ID of the frame CF received, or else reaching of a status, designated by 390, in which the message is recognised as valid. In this case, no message is, however, transmitted out of the intrusion-detection module 13.

Illustrated in Figure 6 is a flowchart of a procedure 400 of identification of the anomaly for a new group of frames CF.

In a step 405, a new group of frames CF is received.

This new group of frames CF is sent to an analysis block 410, which comprises a sequence of steps 420-460 of verification of characteristics of the new group of frames CF received at the node 12, this sequence of verification steps being carried out generating at output, according to the characteristics of the new group of frames CF received, an indication of the anomaly type AT detected or else reaching a valid-message status 390.

In particular, in a step 420 it is verified whether the amount of frames CF transmitted on the entire CAN in a given time interval is admissible. If it is not, an alert AL is issued indicating an anomaly with anomaly type AT4 Denial of Service.

If the amount is admissible, a step 430 is carried out to verify whether the frames CF form part of a vehicle-state check.

If they do, a step 440 is carried out to verify whether the frames CF describe an implausible vehicle state. In the case of positive outcome from step 440 an alert AL is issued indicating an anomaly with anomaly type Implausible Vehicle State AT9. In the case of negative outcome from step 440, the valid-message status 390 is reached.

In the case of negative outcome from step 430, a step 450 is carried out to verify whether the frames CF of the group form part of special patterns. If they do, in a step 460, it is verified whether the frames CF of the group received identify an illegal sequence. If they do not, a valid-message indication 390 is supplied. If they do, an alert AL is issued indicating an anomaly with anomaly type Special Patterns AT10.

In general, it is expedient to envisage execution of both procedures 300 and 400, but in various embodiments there may even be envisaged execution of just one or the other, analysing only the single frames or only the groups.

Hence, from what has been described above, the advantages of the solution proposed emerge clearly.

The method and network described enable detection of suspect behaviours in the traffic that travels on the CAN bus and possibly generation of corresponding alerts.

The module configured for executing an intrusion-detection operation and the module configured for executing a vehicle-recovery operation at each node are preferably implemented via software, for example in the microprocessor of the control unit, but may also be implemented via separate microprocessors or DSP modules.

## Claims

1. A method for monitoring the data traffic (CBT, CF, G) over a CAN bus (11) of a CAN-type communication network (10) of a motor vehicle, said network comprising a plurality of nodes (12) associated to said CAN bus (11) in a signal-exchange relationship in order to detect data traffic (CBT, CF, G) with anomalies (AT) and generate an alert (AL),
said method including
executing on each node (12) an intrusion-detection operation (300, 400) on messages (CF, G) received at said node (12) and a corresponding vehicle-recovery operation (200);
said intrusion-detection operation (300, 400) comprising receiving (205, 310) CAN messages (CF) or groups of CAN messages (G) transmitted to the node (12) on the CAN bus (11), analysing (310, 410) said CAN messages (CF) or groups of CAN messages (G), and issuing an alert (AL) comprising a type of anomaly (AT) that has caused the alert (AL);
said vehicle-recovery operation (200) comprising implementing, on the basis of said type of anomaly (AT), a corresponding intrusion-recovery action (VR),
said method being **characterized by**
said vehicle-recovery operation (200) further comprises a procedure (200) of selection of recovery actions, which is carried out during operation of the vehicle and of the CAN communication network (10), which comprises the following steps:
- upon receipt (205) of said type of anomaly (AT) detected by the intrusion-detection operation (300, 400), associating (210) a category of functions (FC) of the vehicle to the type of anomaly (AT); and
- generating (220), on the basis of said category of functions (FC) extracted in the previous step (210) and of the type of anomaly (AT) received, a corresponding vehicle-recovery action (VR) and a condition of exit (CE) from the corresponding alert (AL), said generation operation (220) comprising accessing a recovery-action database (REC) via said category of functions (FC) extracted in the previous step (201) and said type of anomaly (AT).

2. The method according to Claim 1, **characterized in that** for each CAN message (CF) received at a given node (12), said intrusion-detection operation (300, 400) comprises a first procedure (310) of sequential verification of said CAN messages (CF), which comprises a sequence of steps (320-380) of verification of characteristics of the CAN messages (CF) received at the node (12), said sequence of verification steps (320-380) supplying, as a function of said characteristics of the CAN messages (CF) received at output, an indication of the type of anomaly (AT) detected or a valid-message status (390).

3. The method according to Claim 1 or Claim 2, **characterized in that** for each CAN message (CF) received at a given node (12), said intrusion-detection operation (300, 400) comprises a second procedure (410) of sequential verification of said groups (G) of CAN messages (CF), which comprises a sequence of steps (420-460) of verification of characteristics of the group (G) of CAN messages (CF) received, said sequence of verification steps (420-460) supplying, as a function of said characteristics of the group (G) of CAN messages (CF) at output, an indication of the type of anomaly (AT) detected or a valid-message status (390) .

4. The method according to any one of the preceding claims, **characterized in that** said intrusion-detection operation (300, 400) supplies at output also an identifier (AId) corresponding to the identifier (CAN_ID) of the message (CF) that comprises the anomaly detected (AT).

5. The method according to any one of the preceding claims, **characterized in that** said intrusion-detection operation (300, 400) supplies at output also an anomaly-alert status signal (F) that signals start or end of the anomaly detected.

6. The method according to any one of the preceding claims, **characterized in that**
it comprises an operation of defining off-line said recovery actions (VR) and said exit conditions (CE) that comprises the following steps:
- carrying out a mapping (110), as a function of identifiers (AId) of the message (CF) of the categories of functions (FC) of the vehicle; and
- building (120) said data structure of the recovery operations (REC) by associating to each type of anomaly (AT) and category of functions (FC) a recovery action (VR) and an exit condition (CE) .

7. The method according to any one of the preceding claims, **characterized in that** said recovery actions (VR) comprise one or more of the following:
- reaching the state capable of guaranteeing safety of the driver, of the vehicle occupants, and of other road users;
- disabling the compromised function;
- ignoring the contents of threatening CAN-message identifiers, while seeking to keep the rest of the functions implemented; and
- inhibiting the Diagnostic Service.

8. The method according to any one of the preceding claims, **characterized in that**
said exit conditions (CE1, CE2) comprise an exit condition (CE1) that occurs when the vehicle key is turned into an off position and/or an exit condition (CE2) that occurs when the state of detected anomaly has ceased.

9. A CAN communication network (10) of a vehicle, comprising a CAN bus (11) and a plurality of nodes (12), which are associated to said CAN bus (11) in a signal-exchange relationship and comprise control units (12) for controlling functions of the vehicle, said nodes (12) being configured for detecting data traffic (CBT, CF) with anomalies and generating an alert (AL),
said network being **characterized in that**
each node (12) comprises a module (13) configured for executing the intrusion-detection operation (300, 400) and a module (14) configured for executing the vehicle-recovery operation (200) according to the method of one or more of Claims 1 to 8.

## Patentansprüche

1. Verfahren zum Überwachen des Datenverkehrs (CBT, CF, G) über einen CAN-Bus (11) eines CAN-Kommunikationsnetzwerks (10) eines Kraftfahrzeugs, wobei das Netzwerk mehrere Knoten (12) umfasst, die dem CAN-Bus (11) in einer Signalaustauschbeziehung zugeordnet sind, um Datenverkehr (CBT, CF, G) mit Anomalien (AT) zu erkennen und eine Warnung (AL) zu erzeugen, wobei das Verfahren an jedem Knoten (12) das Ausführen eines Eindringungserkennungsvorgangs (300, 400) für Nachrichten (CF, G), die an dem Knoten (12) empfangen werden, und eines entsprechenden Fahrzeugwiederherstellungsvorgangs (200) umfasst;
wobei der Eindringungserkennungsvorgangs (300, 400) das Empfangen (205, 310) von CAN-Nachrichten (CF) oder Gruppen von CAN-Nachrichten (G), die an den Knoten (12) auf dem CAN-Bus (11) übertragen werden, das Analysieren (310, 410) der CAN-Nachrichten (CF) oder Gruppen von CAN-Nachrichten (G) und die Ausgabe einer Warnung (AL) umfasst, die eine Art von Anomalie (AT) umfasst, die den Alarm (AL) verursacht hat;
wobei der Fahrzeugwiederherstellungsvorgang (200) das Implementieren einer entsprechenden Eindringungswiederherstellungsaktion (VR) auf Grundlage der Art von Anomalie (AT) umfasst, wobei
das Verfahren **dadurch gekennzeichnet ist, dass**
der Fahrzeugwiederherstellungsvorgang (200) ferner eine Prozedur (200) einer Auswahl von Wiederherstellungsaktionen umfasst, die während des Betriebs des Fahrzeugs und des CAN-Kommunikationsnetzwerks (10) ausgeführt wird, die die folgenden Schritte umfasst:
- beim Empfang (205) der Art von Anomalie (AT), die durch den Eindringungserkennungsvorgang (300, 400) erkannt wurde, Zuordnen (210) einer Kategorie von Funktionen (FC) des Fahrzeugs mit der Art von Anomalie (AT); und
- Erzeugen (220) auf Grundlage der in dem vorherigen Schritt (210) extrahierten Kategorie von Funktionen (FC) und der Art der empfangenen Anomalie (AT) einer entsprechenden Fahrzeugwiederherstellungsaktion (VR) und einer Beendigungsbedingung (CE) von der entsprechenden Warnung (AL), wobei der Erzeugungsvorgang (220) das Zugreifen auf eine Wiederherstellungsaktionsdatenbank (REC) über die in dem vorherigen Schritt (201) extrahierte Kategorie von Funktionen (FC) und die Art von Anomalie (AT) umfasst.

2. Verfahren nach Anspruch 1, **dadurch gekennzeichnet, dass** für jede an einem gegebenen Knoten (12) empfangene CAN-Nachricht (CF) der Eindringungserkennungsvorgang (300, 400) eine erste Prozedur (310) von sequentieller Verifikation der CAN-Nachrichten (CF) umfasst, die eine Sequenz von Schritten (320-380) einer Verifikation von Merkmalen der an dem Knoten (12) empfangenen CAN-Nachrichten (CF) umfasst, wobei die Sequenz von Verifikationsschritten (320-380) abhängig von den Merkmalen der an der Ausgabe empfangenen CAN-Nachrichten (CF) einen Hinweis auf die Art von Anomalie (AT), die erkannt wird, oder einen Status für eine gültige Nachricht (390) liefert.

3. Verfahren nach Anspruch 1 oder 2, **dadurch gekennzeichnet, dass** für jede an einem gegebenen Knoten (12) empfangene CAN-Nachricht (CF) der Eindringungserkennungsvorgang (300, 400) eine zweite Prozedur (410) von sequentieller Verifikation der Gruppen (G) von CAN-Nachrichten (CF) umfasst, die eine Sequenz von Schritten (420-460) einer Verifikation von Merkmalen der empfangenen Gruppe (G) von CAN-Nachrichten (CF) umfasst, wobei die Sequenz von Verifikationsschritten (420-460) abhängig von den Merkmalen der Gruppe (G) von CAN-Nachrichten (CF) an der Ausgabe einen Hinweis auf die Art von Anomalie (AT), die erkannt wird, oder einen Status für eine gültige Nachricht (390) liefert.

4. Verfahren nach einem der vorhergehenden Ansprüche, **dadurch gekennzeichnet, dass** der Eindringungserkennungsvorgang (300, 400) eine Ausgabe ebenso an einen Bezeichner (Aid) liefert, der dem Bezeichner (CAN_ID) der Nachricht (CF) entspricht, die die erkannte Anomalie (AT) umfasst.

5. Verfahren nach einem der vorhergehenden Ansprüche, **dadurch gekennzeichnet, dass** der Eindringungserkennungsvorgang (300, 400) eine Ausgabe ebenso an ein Zustandssignal (F) für eine Anomalie liefert, das den Anfang oder das Ende der erkannten Anomalie signalisiert.

6. Verfahren nach einem der vorhergehenden Ansprüche, **dadurch gekennzeichnet, dass** es einen Vorgang des Definierens der Wiederherstellungsaktionen (VR) offline und die Beendigungsbedingungen (CE) umfasst, die die folgenden Schritte umfassen:
- Durchführen einer Abbildung (110) abhängig von Bezeichnern (AId) der Nachricht (CF) der Kategorien von Funktionen (FC) des Fahrzeugs; und
- Erstellen (120) der Datenstruktur der Wiederherstellungsvorgänge (REC) durch Zuordnen einer Wiederherstellungsaktion (VR) und einer Beendigungsbedingung (CE) mit jeder Art von Anomalie (AT) und Kategorie von Funktionen (FC).

7. Verfahren nach einem der vorhergehenden Ansprüche, **dadurch gekennzeichnet, dass** die Wiederherstellungsaktionen (VR) Folgendes umfassen:
- Erreichen des Zustands, der die Sicherheit des Fahrers, der Fahrzeuginsassen und anderer Verkehrsteilnehmer gewährleisten kann;
- Deaktivieren der kompromittierten Funktion;
- Ignorieren des Inhalts bedrohlicher CAN-Nachrichtenbezeichner, wobei versucht wird, die restlichen Funktionen implementiert zu halten; und
- Hemmen der diagnostischen Dienstleistung.

8. Verfahren nach einem der vorhergehenden Ansprüche, **dadurch gekennzeichnet, dass** die Beendigungsbedingungen (CE1, CE2) eine Beendigungsbedingung (CE1), die auftritt, wenn der Fahrzeugschlüssel in eine Aus-Stellung gedreht wird, und/oder eine Beendigungsbedingung (CE2), die auftritt, wenn der Zustand der erkannten Anomalie aufgehört hat.

9. CAN-Kommunikationsnetzwerk (10) eines Fahrzeugs, umfassend einen CAN-Bus (11) und mehrere Knoten (12), die dem CAN-Bus (11) in einer Signalaustauschbeziehung zugeordnet sind und Steuereinheiten (12) zum Steuern von Funktionen des Fahrzeugs umfassen, wobei die Knoten (12) zum Erkennen von Datenverkehr (CBT, CF) mit Anomalien und zum Erzeugen einer Warnung (AL) konfiguriert sind, wobei das Netzwerk **dadurch gekennzeichnet ist, dass** jeder Knoten (12) ein Modul (13), das zum Ausführen des Eindringungserkennungsvorgangs (300, 400) konfiguriert ist, und ein Modul (14) umfasst, das zum Ausführen des Fahrzeugwiederherstellungsvorgangs (200) gemäß dem Verfahren nach einem oder mehreren der Ansprüche 1 bis 8 konfiguriert ist.

## Revendications

1. Procédé de surveillance du trafic de données (CBT, CF, G) sur un bus CAN (11) d'un réseau de communication de type CAN (10) d'un véhicule à moteur, ledit réseau comprenant une pluralité de noeuds (12) associés audit bus CAN (11) dans une relation d'échange de signaux de manière à détecter un trafic de données (CBT, CF, G) avec des anomalies (AT) et générer une alerte (AL),
ledit procédé comprenant
l'exécution sur chaque noeud (12) d'une opération de détection d'intrusion (300, 400) sur des messages (CF, G) reçus au niveau dudit noeud (12) et d'une opération de rétablissement de véhicule correspondante (200) ;
ladite opération de détection d'intrusion (300, 400) comprenant la réception (205, 310) de messages CAN (CF) ou de groupes de messages CAN (G) transmis au noeud (12) sur le bus CAN (11), l'analyse (310, 410) desdits messages CAN (CF) ou groupes de messages CAN (G), et l'émission d'une alerte (AL) comprenant un type d'anomalie (AT) qui a provoqué l'alerte (AL) ;
ladite opération de rétablissement de véhicule (200) comprenant la mise en oeuvre, sur la base dudit type d'anomalie (AT), d'une action de rétablissement d'intrusion correspondante (VR),
ledit procédé étant **caractérisé en ce que**
ladite opération de rétablissement de véhicule (200) comprend en outre une procédure (200) de sélection d'actions de rétablissement, qui est exécutée durant le fonctionnement du véhicule et du réseau de communication CAN (10), qui comprend les étapes suivantes :
- lors de la réception (205) dudit type d'anomalie (AT) détecté par ladite opération de détection d'intrusion (300, 400), l'association (210) d'une catégorie de fonctions (FC) du véhicule au type d'anomalie (AT) ; et
- la génération (220), sur la base de ladite catégorie de fonctions (FC) extraites dans l'étape précédente (210) et du type d'anomalie (AT) reçu, d'une action de rétablissement de véhicule correspondante (VR) et d'une condition de sortie (CE) de l'alerte correspondante (AL), ladite opération de génération (220) comprenant l'accès à une base de données d'actions de rétablissement (REC) via ladite catégorie de fonctions (FC) extraites dans l'étape précédente (210) et dudit type d'anomalie (AT).

2. Procédé selon la revendication 1, **caractérisé en ce que**, pour chaque message CAN (CF) reçu au niveau d'un noeud donné (12), ladite opération de détection d'intrusion (300, 400) comprend une première procédure (310) de vérification séquentielle desdits messages CAN (CF), qui comprend une séquence d'étapes (320-380) de vérification de caractéristiques des messages CAN (CF) reçus au niveau du noeud (12), ladite séquence d'étapes de vérification (320-380) délivrant, en fonction desdites caractéristiques des messages CAN (CF) reçus en sortie, une indication du type d'anomalie (AT) détecté ou un état de message valide (390).

3. Procédé selon la revendication 1 ou la revendication 2, **caractérisé en ce que**, pour chaque message CAN (CF) reçu au niveau d'un noeud donné (12), ladite opération de détection d'intrusion (300, 400) comprend une deuxième procédure (410) de vérification séquentielle desdits groupes (G) de messages CAN (CF), qui comprend une séquence d'étapes (420-460) de vérification de caractéristiques du groupe (G) de messages CAN (CF) reçus, ladite séquence d'étapes de vérification (420-460) délivrant, en fonction desdites caractéristiques du groupe (G) de messages CAN (CF) en sortie, une indication du type d'anomalie (AT) détecté ou un état de message valide (390).

4. Procédé selon l'une quelconque des revendications précédentes, **caractérisé en ce que** ladite opération de détection d'intrusion (300, 400) délivre également en sortie un identifiant (AId) correspondant à l'identifiant (CAN_ID) du message (CF) qui comprend l'anomalie détectée (AT).

5. Procédé selon l'une quelconque des revendications précédentes, **caractérisé en ce que** ladite opération de détection d'intrusion (300, 400) délivre également en sortie un signal d'état d'alerte d'anomalie (F) qui signale un début ou une fin de l'anomalie détectée.

6. Procédé selon l'une quelconque des revendications précédentes, **caractérisé en ce que**
il comprend une opération de définition hors ligne desdites actions de rétablissement (VR) et desdites conditions de sortie (CE) qui comprend les étapes suivantes :
- l'exécution d'une cartographie (110), en fonction d'identifiants (AId) du message (CF) des catégories de fonctions (FC) du véhicule ; et
- la construction (120) de ladite structure de données des opérations de rétablissement (REC) en associant à chaque type d'anomalie (AT) et catégorie de fonctions (FC) une action de rétablissement (VR) et une condition de sortie (CE).

7. Procédé selon l'une quelconque des revendications précédentes, **caractérisé en ce que**
lesdites actions de rétablissement (VR) comprennent un ou plusieurs de ce qui suit :
- l'atteinte de l'état capable de garantir une sécurité du conducteur, des occupants du véhicule et des autres usagers de la route ;
- la désactivation de la fonction compromise ;
- le fait d'ignorer les contenus d'identifiants de messages CAN menaçants, tout en cherchant à maintenir le reste des fonctions mises en oeuvre ; et
- l'inhibition du service de diagnostic.

8. Procédé selon l'une quelconque des revendications précédentes, **caractérisé en ce que**
lesdites conditions de sortie (CE1, CE2) comprennent une condition de sortie (CE1) qui se produit quand la clé du véhicule est tournée dans une position d'arrêt et/ou une condition de sortie (CE2) qui se produit quand l'état d'une anomalie détectée a cessé.

9. Réseau de communication CAN (10) d'un véhicule, comprenant un bus CAN (11) et une pluralité de noeuds (12), qui sont associés audit bus CAN (11) dans une relation d'échange de signaux et comprend des unités de commande (12) pour commander des fonctions du véhicule, lesdits noeuds (12) étant configurés pour détecter un trafic de données (CBT, CF) avec des anomalies et générer une alerte (AL),
ledit réseau étant **caractérisé en ce que**
chaque noeud (12) comprend un module (13) configuré pour exécuter l'opération de détection d'intrusion (300, 400) et un module (14) configuré pour exécuter l'opération de rétablissement de véhicule (200) conformément au procédé selon une ou plusieurs des revendications 1 à 8.
